# EUROPEAN PATENT SPECIFICATION

(11) **EP 1 671 756 B1**
(45) Date of publication and mention of the grant of the patent: **25.06.2008**
(21) Application number: 05027076.8
(22) Date of filing: 12.12.2005
(51) Int. Cl.: B25J 9/10, F16H 49/00

(54) **Link drive mechanism with a harmonic gear reducer and industrial robot using the same**
Antriebsmechanismus für ein Gelenkstruktur mit einem harmonischen Untersetzungsgetriebe und Industrieroboter mit einem solchen Mechanismus
Mécanisme d'entraînement pour structure articulée muni d'un réducteur harmonique et robot industriel utilisant un tel mécanisme

(30) Priority: 16.12.2004 JP 2004363918
(43) Date of publication of application: 21.06.2006
(73) Proprietor: Seiko Epson Corporation, Shinjuku-ku Tokyo 163-0811 (JP)
(72) Inventor: Ono, Masatoshi, Nagano-ken 392-8502 (JP)
(74) Representative: HOFFMANN EITLE

(56) References cited:
- JP-A- 63 229 287
- SU-A1- 1 740 826
- PATENT ABSTRACTS OF JAPAN vol. 2003, no. 03, 5 May 2003 (2003-05-05) -& JP 2002 326182 A (DAIHEN CORP), 12 November 2002 (2002-11-12)
- PATENT ABSTRACTS OF JAPAN vol. 012, no. 286 (M-727), 5 August 1988 (1988-08-05) -& JP 63 062934 A (FUJITSU LTD), 19 March 1988 (1988-03-19)

## Description

### BACKGROUND OF THE INVENTION

### 1. Field of the Invention

The present invention relates to a link drive structure, and more particularly, to a link drive structure preferably used to an industrial robot.

### 2. Description of the Related Art

Recently, industrial robots are required to cope also with unusual environments in which particular gases, chemicals, and the like are used, in addition to fields of production in which high speed, high accuracy, and a high level of cleanness are required. Most of vertical shaft structures of, for example, current SCARA(Selective Compliance Assembly Robot Arm) type robots constitute a direct drive shaft using a ball screw. In this structure, a protection member such as a bellows and the like is necessary to prevent dusts and grease from scattering from the insides of arms. However, when the bellows is used, a material thereof is limited due to fluctuation of the internal pressure of a robot caused by contraction of the bellows and from a point of view of durability and the like of the bellows. Accordingly, when a high level of cleanness is required and when a job in an unusual environment is required, it is difficult for the bellows to cope with the requirements.

In contrast, there is an industrial robot employing a link type vertical shaft structure (refer to, for example, Japanese Unexamined Patent Application Publication No. 2002-326182). The link type vertical shaft structure is arranged such that a pair of first right and left arms that constitute a parallel link on one side are coupled with a base and a link base, a pair of second right and left arms that constitute a parallel link on the other side are coupled with the link base and an arm base, a drive motor is mounted on the link base, a transmission mechanism using a bevel gear is employed to apply rotation force to a coupling shaft of the first and second arms on both the right and left sides, and the transmission mechanism is accommodated in the inside of the link base together with a reducer.

The parallel link type vertical shaft structure as shown in patent document 1 can constitute a so-called bellowsless vertical shaft structure without using a bellows. However, since the vertical shaft structure employs a transmission mechanism using a bevel gear to rotate the coupling shaft of the first and second arms, it is disadvantageous in that a positional accuracy is deteriorated by the effect of backlash of the bevel gear. Further, in a bevel gear mechanism, since right and left coupling shafts must be rotated in an opposite direction each other in such a manner that a coupling shaft of a first arm on a left side is rotated clockwise and a coupling shaft of a second arm on a right side is rotated counterclockwise, the structure of the coupling portions of the first and second arms are made very complex, and assembling of the coupling portions is very difficult. Further, a seal structure of the coupling portions is also very complex.

Further, an end effector such as a hand unit and the like is mounted on the extreme end of a robot arm to cause the end effector to execute a robot job. However, in a structure in which wiring or piping of a driving device of the end effector, robot arms, and the like are exposed to the vicinity of the robot arms, a layout of the wiring or the piping must be determined such that the motion of the robot arms is not restricted by it and that it does not interfere with an external object and the like, in addition to that an outside appearance is not good.

An object of the present invention, which was made in view of the above circumstances, is to provide a link drive structure having a high positional accuracy and an excellent sealing property and an industrial robot using the structure.

Further, an object of the present invention is to provide an industrial robot which does not expose wiring and piping of a driving device of an end effector, robot arms, and the like to the outside.

### SUMMARY OF THE INVENTION

A link drive structure according to the present invention is characterized by comprising a first arm constituting a parallel link on one side, a second arm constituting a parallel link on the other side, a coupling base interposed, between end portions, at which the first arm is coupled with the second arm, to couple the end portions of both the parallel links, and a drive motor with a harmonic gear reducer disposed to the coupling end portion of the arm on the one side, wherein the harmonic gear reducer has two output shafts rotating in the same direction, a first output shaft of them is coupled with the end portion of the other arm, and a second output shaft is coupled with the coupling base.

The link drive structure of the present invention is composed of the parallel links including the first and second arms through the coupling base. Thus, a position can be completely controlled by only the rotational motion of rotary shafts. Further, since the harmonic gear reducer having the two output shafts, which rotate in the same direction, is used, no backlash arises, thereby pinpoint position accuracy can be realized. Further, since a seal mechanism is simple and excellent in a sealing property because the rotary shafts are employed, the link drive structure can easily cope with various unusual environments such as a clean environment and the like.

Note that, in the present invention, when the drive motor with the harmonic gear reducer is mounted on the coupling end portion of the first arm, a first output shaft of the harmonic gear reducer is coupled with the coupling end portion of the second arm, and a second output shaft is coupled with the coupling base. Inversely, when the drive motor with the harmonic gear reducer is mounted on the coupling end portion of the second arm, the first output shaft of the harmonic gear reducer is coupled with the coupling end portion of the first arm, and the second output shaft is coupled with the coupling base likewise.

Further, in the present invention, a ratio between speed reduction of the first and second output shafts in the harmonic gear reducer is set to 1 : 2.

With this arrangement, a movable base coupled with the second arm constituting the parallel link can be moved linearly.

Further, in the present invention, the first and second output shafts are preferably disposed concentrically. With this arrangement, the length of the harmonic gear reducer can be reduced, thereby a drive unit can be formed compactly.

Further, in the present invention, the inside of the link drive structure has a hollow structure, and wiring and/or piping passes through the inside.

With this arrangement, the wiring/piping can be concealed in the insides of the first and second arms, no restriction is applied to the motions of the first and second arms and a robot arm, and no interference with an external object and the like arises. Further, a neat and tidy impression is given to an outside appearance.

Further, an ordinary industrial robot can be arranged by using the link drive structure of the present invention. In particular, the link drive structure can be preferably used as a vertical shaft structure of a SCARA type robot.

### BRIEF DESCRIPTION OF THE DRAWINGS

Fig. 1 is a side elevational view of a SCARA type robot having a link drive structure of the present invention;
Fig. 2 is an upper surface view of the SCARA type robot;
Fig. 3 is a sectional view showing a schematic arrangement of a link drive structure;
Fig. 4 is a sectional view of a drive unit; and
Fig. 5 is a view explaining operation of the link drive structure.

### DESCRIPTION OF THE PREFERRED EMBODIMENTS

An example of an embodiment to which the present invention is applied will be explained below with reference to drawings. Although an example in which the link drive structure of the present invention is used as a vertical shaft structure of a SCARA type robot is shown here, the present invention is by no means limited thereto.

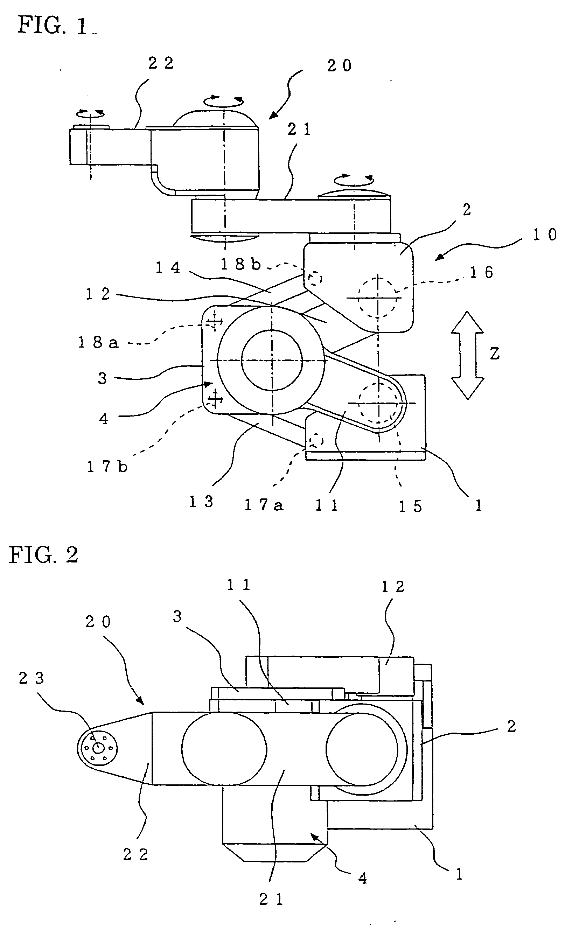

Fig. 1 is a side elevational view of an industrial robot (SCARA type robot) of the present invention, and Fig. 2 is an upper surface view of the SCARA type robot.

A link drive structure (vertical shaft structure) 10 of the SCARA type robot is arranged such that an intermediate coupling base 3 is interposed between a fixed base 1 installed on a floor surface or the like and an upper movable base 2, and two sets of parallel link structures are coupled with each other in a shape bent to a "<" state through the coupling base 3.

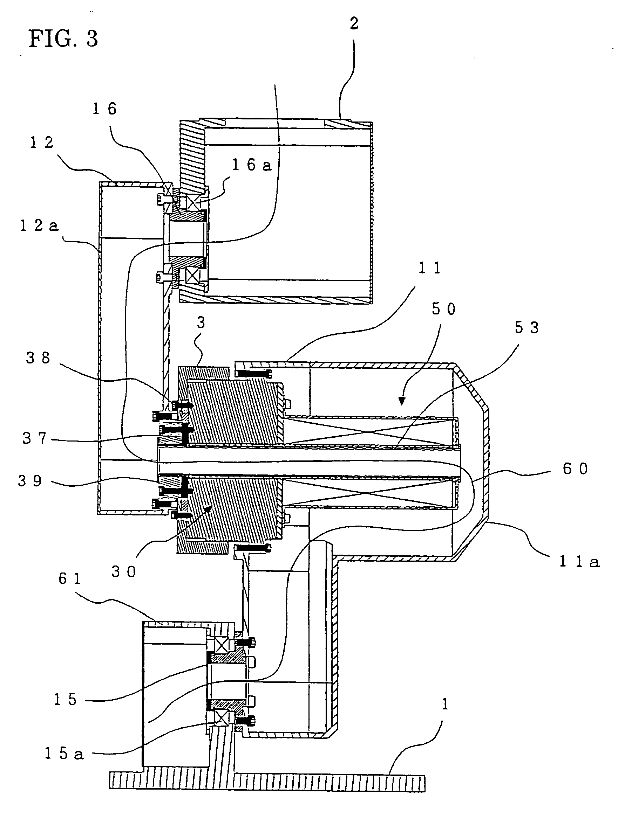

A first arm 11 on one side constitutes a parallel link together with a first link 13, an end (lower end portion) of the first arm 11 is rotatably coupled with the fixed base 1 through a shaft 15, a drive motor with a harmonic gear reducer to be described later is attached to the other end (upper end portion) thereof, and a second output shaft (refer to Figs. 3 to 5) of the harmonic gear reducer is rotatably coupled with the coupling base 3.

Both the ends of the first link 13 are rotatably coupled with the fixed base 1 and the coupling base 3 through shafts 17a, 17b.

A second arm 12 on the other side constitutes a parallel link together with a second link 14, an end (lower end portion) of the second arm 12 is coupled with a first output shaft of the harmonic gear reducer, and the other end (upper end portion) thereof is rotatably coupled with the movable base 2 through a shaft 16.

Both the ends of the second link 14 are rotatably coupled with the coupling base 3 and the movable base 2 through shafts 18a, 18b.

Further, the drive motor is directly attached to the harmonic gear reducer. The coupling base 3 is interposed between the upper end portion of the first arm 11 and the lower end portion of the second arm 12.

As described above, the fixed base 1, the coupling base 3, the first arm 11, and the first link 13 constitute a parallel link structure that is formed in a parallelogram when the coupling points thereof are connected to each other, and further the movable base 2, the coupling base 3, the second arm 12, and the second link 14 also constitute a parallel link structure that is formed in a parallelogram when the coupling points thereof are connected to each other likewise. The movable base 2 is kept in a predetermined posture (for example, horizontal) by the two sets of the parallel link structures at all times regardless a rotational angle of the first arm 11.

A robot arm structure as an upper structure 20 is mounted on the movable base 2. In the SCARA type robot, a robot arm structure mainly composed of a first horizontal arm 21 and a second horizontal arm 22 is mounted on the movable base 2. The first horizontal arm 21 can rotate about a first joint shaft (not shown) for coupling the first horizontal arm 21 with the movable base 2, and the second horizontal arm 22 can rotate about a second joint shaft (not shown) for coupling the first horizontal arm 21 with the second horizontal arm 22. Further, a working shaft 23 (refer to Fig. 2) is rotatably mounted on the extreme end of the second horizontal arm 22, and an end effector (not shown) such as a hand unit and the like is attached to the working shaft.

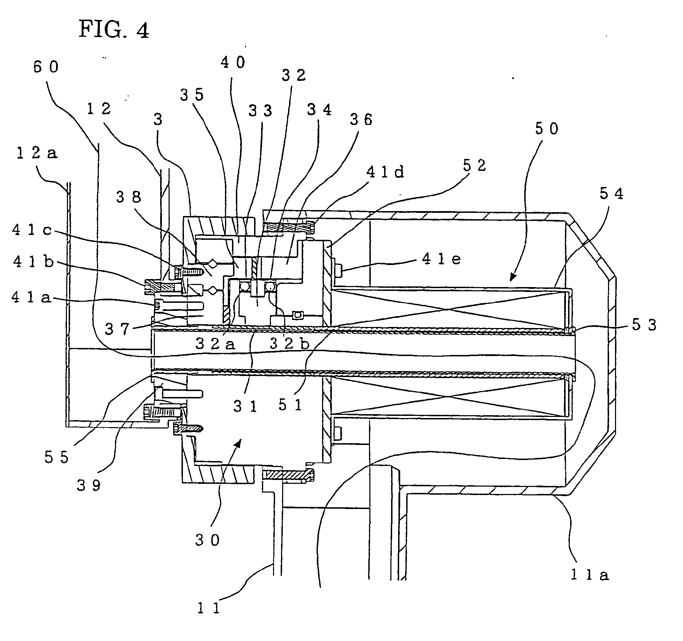

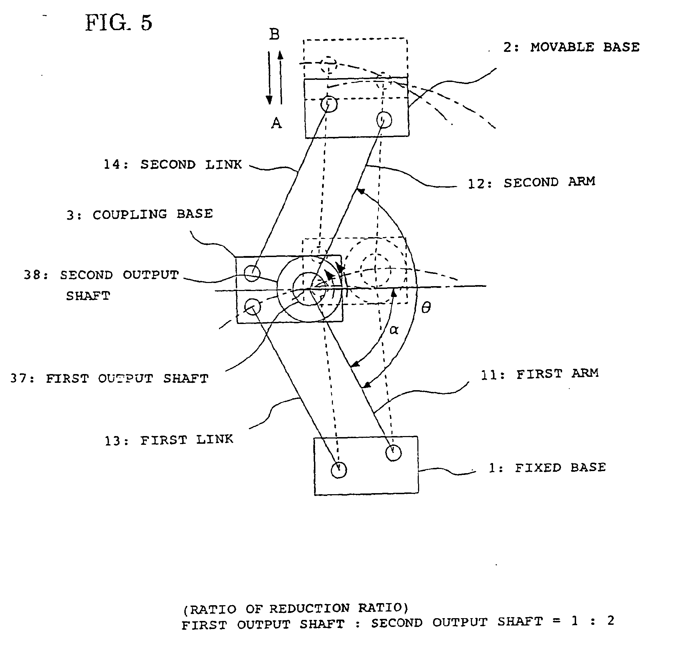

Further, the link drive structure 10 described above will be described in detail based on Figs. 3 to 5. Fig. 3 is a sectional view showing a schematic arrangement of the link drive structure 10, and Fig. 4 is a sectional view of a drive unit of the link drive structure 10. Note that the lower half portion of the harmonic gear reducer 30 is omitted in Fig. 4. Further, Fig. 5 is a view explaining operation of the link drive structure 10.

The drive unit 4 of the link drive structure 10 is composed of the drive motor 50 with the harmonic gear reducer 30, and mounted on the upper end portion of the first arm 11, that is, a coupling end portion coupled with the second arm 12.

The harmonic gear reducer 30 is mainly composed of an input shaft 31, a wave generator 32, flexsplines 33, 34, circular splines 35, 36, a first output shaft 37, and a second output shaft 38.

A motor shaft 51 of the drive motor 50 is firmly coupled with the input shaft 31 through, for example, a flange joint (illustration of which is omitted) and the like so that no looseness arises in a rotational direction. The wave generator 32 is secured to the input shaft 31 by screws, an adhesive, and the like and has two bearings 32a, 32b which generate a wave motion by being engaged with the inner peripheries of the circular splines 35, 36, respectively.

The teeth of the flexspline 33 on one side are partly meshed with the circular spline 35 as well as the flexspline 33 is secured to the first output shaft 37 by not shown attachment screws and the like.

The teeth of the flexspline 34 on the other side are partly meshed with the circular spline 36 as well as the flexspline 34 is secured to the second output shaft 38 by not shown attachment screws and the like together with the circular spline 35. The circular spline 36 on the other side is secured to a reducer case 40.

Then, the first output shaft 37 is secured to an end of the second arm 12, and the second output shaft 38 is secured to the coupling base 3.

The first and second output shafts 37, 38 are disposed concentrically. With this arrangement, the length of the harmonic gear reducer 30 can be reduced, which can make the drive unit 4 compact.

The first output shaft 37 is attached to the lower end portion of the second arm 12 by attachment screws 41a, 41b through an arm connecting member 39. Further, the second output shaft 38 is attached to the coupling base 3 by an attachment screw 41c.

The harmonic gear reducer 30 is attached to the upper end portion of the first arm 11 by an attachment screw 41d.

The drive motor 50 is attached to the harmonic gear reducer 30 by an attachment screw 41e through a motor flange 52.

As described above, the harmonic gear reducer 30 is arranged as a one-input/two-outputs reducer having the one input shaft 31 and the two output shafts 37, 38 as well as the first and second output shafts 37, 38 rotate in the same direction. Further, the first and second output shafts 37, 38 have a reduction ratio of 1 : 2. The above reduction ratio can be achieved by changing the number of teeth of the flexsplines 33 and 34 or the number of teeth of the circular splines 35 and 36.

Accordingly, since no backlash arises, the first and second arms 11, 12 can be turned with pinpoint accuracy, thereby the position of the movable base 2 can be controlled with pinpoint accuracy.

Further, the link drive structure 10 has a hollow structure as shown in Figs. 3 and 4. More specifically, all of the movable base 2, the shaft 16, the drive motor 50 with the harmonic gear reducer 30, the first arm 11, and the shaft 15 have the hollow structure. Further, the drive motor 50 is composed of a hollow motor, and a sleeve 53 is disposed at the center of the drive motor 50 with the harmonic gear reducer 30 entirely passing therethrough. Note that reference numeral 54 denotes a sleeve attachment member, and 55 denotes a slide bearing interposed between the sleeve 53 and the arm connecting member 39. Further, in Fig. 3, reference numeral 11a denotes a first arm cover, 12a denotes a second arm cover, 15a denotes a bearing of the hollow shaft 15, and 16a denotes a bearing of the hollow shaft 16.

Wiring/piping 60 of the upper structure 20, wiring (not shown) of the drive motor 50, and the like can be disposed in the inside of the link drive structure 10 by arranging the link drive structure 10 as the hollow structure as described above. The wiring/piping 60, and the like are connected to a wiring board, a valve, and the like in an accommodation box 61 disposed on the fixed base 1.

As a result, according to the arrangement of the link drive structure 10, since the wiring/piping 60 and the like are accommodated in the inside of the link drive structure 10 and are not exposed to the outside, the robot gives a neat and tidy impression in the outside appearance thereof as well as the link drive structure 10, the robot arms and like are not restricted in motion and has no possibility of interference with an external object and the like.

Further, the first and second arms 11, 12 are hermetically closed by the first arm cover 11a and the second arm cover 12a, respectively, and the arm connecting member 39 for connecting the second arm 12 to the first output shaft 37, the coupling base 3 of the second output shaft 38 and the reducer case 40, the attachment portions of the hollow arms 15 and 16, and the like are sealed by not shown 0-rings and the like. Accordingly, the robot can be easily applied to various unusual environments such as a clean environment and the like because it is excellent in a sealing property, and dusts, grease, and the like do not scatter from the insides of the arms.

Next, the operation of the harmonic gear reducer 30 will be explained based on a schematic view of Fig. 5.

In Fig. 5, when the movable base 2 is moved (raised) from a position A shown by a solid line to a position B shown by a dotted line, both the first and second output shafts 37, 38 of the harmonic gear reducer 30 are rotated in the same counterclockwise direction. Since the coupling base 3 is kept horizontal by the two sets of upper and lower parallel link structures and further the first and second output shafts 37, 38 have the reduction ration set to 1 : 2, the second arm 12 rotates at an angle θ between it and the first arm 11 that is twice the horizontal angle α of the first arm 11. More specifically, since the first and second arms 11, 12 have the same rotation angle (horizontal angle), the movable base 2 moves linearly.

Further, when the movable base 2 is lowered from the position B to the position A, both the first and second output shafts 37, 38 are rotated in an opposite clockwise direction.

Although a case in which the drive motor 50 with the harmonic gear reducer 30 is mounted on the upper end portion of the first arm 11 in the embodiment described above, the drive motor 50 with the harmonic gear reducer 30 may be mounted on the lower end portion of the second arm 12 by an inverted mounting method. In this case, the first output shaft 37 is coupled with the first arm 11, and the second output shaft 38 is coupled with the coupling base 3.

Further, since the link drive structure of the present invention need not arrange the first and second arms 11, 12 as a pair on the right and left sides as shown in the patent document 1, the link drive structure can be formed compact.

Further, when the link drive structure of the present invention is installed, for example, horizontally, it can be used as an expansion/contraction structure in a right/left direction. The movable base 2 may be guided as a sliding member. Accordingly, the link drive structure of the present invention can be applied to a wide region.

## Claims

1. A link drive structure (10) comprising:
a first arm (11) constituting a parallel link on one side;
a second arm (12) constituting a parallel link on the other side;
a coupling base (3) interposed between end portions, at which the first arm (11) is coupled with the second arm (12), to couple the end portions of both the parallel links; and
a drive motor (50) **characterized in that** the drive motor is provided with a harmonic gear reducer (30) disposed to the coupling end portion of the arm on the one side,
wherein the harmonic gear reducer (30) has two output shafts (37, 38) rotating in the same direction, a first output shaft (37) of them is coupled with the end portion of the second arm (12), and a second output shaft (38) is coupled with the coupling base (3).

2. A link drive structure according to claim 1, wherein a ratio between speed reduction of the first (37) and second (38) output shafts in the harmonic gear reducer is set to 1 : 2.

3. A link drive structure according to claim 1 or 2, wherein the first (37) and second (38) output shafts are disposed concentrically.

4. A link drive structure according to any of claims 1 to 3, wherein the inside of the link drive structure (10) has a hollow structure, and wiring and/or piping (60) passes through the inside thereof.

5. An industrial robot comprising the link drive structure (10) according to any of claims 1 to 4.

6. A SCARA type industrial robot, wherein the link drive structure (10) according to any of claims 1 to 4 is arranged as a vertical shaft structure.

## Patentansprüche

1. Gelenkantriebsstruktur (10), mit:
einem ersten Arm (11), der ein paralleles Glied auf einer Seite bildet;
einem zweiten Arm (12), der ein paralleles Glied auf der anderen Seite bildet;
einer Kopplungsbasis (3), die zwischen Endabschnitten angeordnet ist, an welcher der erste Arm (11) mit dem zweiten Arm (12) gekoppelt ist, um die Endabschnitte von beiden der parallelen Glieder zu koppeln; und
einem Antriebsmotor (50), **dadurch gekennzeichnet, dass** der Antriebsmotor mit einem harmonischen Untersetzungsgetriebe (30) versehen ist, das an dem Kopplungsendabschnitt des Arms auf der einen Seite angeordnet ist,
wobei das harmonische Untersetzungsgetriebe (30) zwei Ausgangswellen (37, 38) aufweist, die sich in die gleiche Richtung drehen, wobei eine erste Ausgangswelle (37) von ihnen mit dem Endabschnitt des zweiten Arms (12) gekoppelt ist, und eine zweite Ausgangswelle (38) mit der Kopplungsbasis (3) gekoppelt ist.

2. Gelenkantriebsstruktur nach Anspruch 1, bei der ein Verhältnis zwischen einer Untersetzung der ersten (37) und der zweiten (38) Ausgangswelle in dem harmonischen Untersetzungsgetriebe auf 1:2 festgelegt ist.

3. Gelenkantriebsstruktur nach Anspruch 1 oder 2, bei der die erste (37) und die zweite (38) Ausgangswelle konzentrisch angeordnet sind.

4. Gelenkantriebsstruktur nach einem der Ansprüche 1 bis 3, bei der die Innenseite der Gelenkantriebsstruktur (10) eine hohle Struktur aufweist, und Verdrahtungen und/oder Leitungen (60) durch die Innenseite davon durchgehen.

5. Industrieroboter mit der Gelenkantriebsstruktur (10) nach einem der Ansprüche 1 bis 4.

6. Industrieroboter des Scara-Typs, bei dem die Gelenkantriebsstruktur (10) nach einem der Ansprüche 1 bis 4 als eine vertikale Wellenstruktur angeordnet ist.

## Revendications

1. Structure d'entraînement d'articulation (10) comprenant :
◆ un premier bras (11) constituant une articulation parallèle sur un côté ;
◆ un deuxième bras (12) constituant une articulation parallèle sur l'autre côté ;
◆ une base de couplage (3) interposée entre des parties d'extrémité, au niveau de laquelle le premier bras (11) est couplé au deuxième bras (12), pour coupler les parties d'extrémité des deux articulations parallèles ; et
◆ un moteur d'entraînement (50), **caractérisé en ce que** le moteur d'entraînement est pourvu d'un réducteur à engrenage harmonique (30) disposé sur la partie d'extrémité de couplage du bras sur un des côtés,
dans laquelle le réducteur à engrenage harmonique (30) présente deux arbres de sortie (37, 38) tournant dans la même direction, dont un premier arbre de sortie (37) est couplé à la partie d'extrémité du deuxième bras (12), et un deuxième arbre de sortie (38) est couplé à la base de couplage (3).

2. Structure d'entraînement d'articulation selon la revendication 1, dans laquelle un rapport entre la réduction de vitesse du premier arbre de sortie (37) et du deuxième arbre de sortie (38) dans le réducteur à engrenage harmonique est fixé à 1:2.

3. Structure d'entraînement d'articulation selon la revendication 1 ou 2, dans laquelle le premier arbre de sortie (37) et le deuxième arbre de sortie (38) sont disposés de manière concentrique.

4. Structure d'entraînement d'articulation selon l'une quelconque des revendications 1 à 3, dans laquelle l'intérieur de la structure d'entraînement d'articulation (10) présente une structure creuse, et un câblage et/ou une canalisation (60) passe à travers l'intérieur de celle-ci.

5. Robot industriel comprenant la structure d'entraînement d'articulation (10) selon l'une quelconque des revendications 1 à 4.

6. Robot industriel du type SCARA, dans lequel la structure d'entraînement d'articulation (10) selon l'une quelconque des revendications 1 à 4 est agencée comme une structure d'arbre vertical.
